# EUROPEAN PATENT APPLICATION

(11) **EP 3 933 744 A1**
(43) Date of publication of application: **05.01.2022**
(21) Application number: 19921546.8
(22) Date of filing: 28.03.2019
(51) Int. Cl.: G06Q 50/04

(54) **BLOCKCHAIN-BASED INDUSTRIAL MANUFACTURING RESOURCE SHARING METHOD, DEVICE AND SYSTEM**

(71) Applicant: Siemens Aktiengesellschaft, 80333 München (DE)
(72) Inventor: WANG, Dong, Beijing 100102 (CN)
(74) Representative: Isarpatent
(86) International application number: PCT/CN2019/080179
(87) International publication number: WO 2020/191735

(57) **Abstract**

The present invention provides a blockchain-based industrial manufacturing resource sharing method, device and system, comprising the steps of: S1. receiving an industrial manufacturing order, analyzing resources required to complete the industrial manufacturing order, splitting the process of completing the industrial manufacturing order into a plurality of tasks in a sequence, and then pushing the plurality of tasks in the sequence to a sharing platform; and S2. evaluating resources that may be provided by a plurality of factories on the sharing platform, sequentially matching, according to an evaluation result, factory resources that allow completion of the plurality of tasks, and then completing a handshake and generating a data block of the blockchain. A blockchain-based industrial manufacturing resource sharing mechanism provided by the present invention allows full utilization of factory resources on a sharing platform at a low cost and a high efficiency, and the present invention realizes resource sharing under different factors. For manufacturers, resource utilization and production efficiency have improved. For customers, costs are reduced.

## Description

### Technical Field

The present invention relates to industrial automation, and in particular to a blockchain-based industrial manufacturing resource sharing method, device and system.

### Background Art

Current industrial manufacturing processes are mostly managed by centralized monitoring and control. Whether for make-to-stock manufacturing or make-to-order manufacturing, the industry needs a trustworthy management mechanism for planning energy and managing the entire manufacturing process. Generally, such a trustworthy management mechanism is very complicated, with sales, planning, operation, and other portions respectively composed of a plurality of functional departments and roles, wherein the roles may be taken up by people or systems. Efficiency greatly depends on the cooperation between experts and various roles. Greater ease of decision making and shorter reaction time will lead to better performance. However, in actual operation, good cooperation in the trustworthy mechanism does not mean good results, because of changeable and unexpected situations, including machine failures, urgent orders, market and customer changes. Centralized management does not always work well enough so that the entire process is executed flexibly and effectively.

ERP and MES are two software systems widely used in manufacturing companies to manage production data and execute collaborative processes. All relevant information, such as sales orders, purchase orders, production plans, work orders, raw materials, machine, inventory, and employees, is maintained in these software systems. Firstly, the prior art is also integrated with some tools and algorithms, which are key components for enabling more efficient execution of production. Obviously, a better algorithm will achieve better performance. Therefore, optimizing these components is one of the main objectives, for example, defining achievement of the lowest inventory as an optimization objective.

An advantage of a solution provided by the prior art is that, considering many factors that are not directly related to the production itself, a plan may be executed for production at a high level, for example, market forecasts or experience of operators. A disadvantage of a solution provided by the prior art is unbalanced resource utilization. Since a plan is executed from top to bottom, the production process is deemed a group behavior for earlier planning, and, for example, no individual differences need to be considered at this stage. Therefore, a gap between planning and execution is rational and inevitable, in which there is always waiting time, such as a waiting queue of available devices.

### Summary of the Invention

A first aspect of the present invention provides a blockchain-based industrial manufacturing resource sharing method, which comprises the steps of: S1. receiving an industrial manufacturing order, analyzing resources required to complete the industrial manufacturing order, splitting the process of completing the industrial manufacturing order into a plurality of tasks in a sequence, and then pushing the plurality of tasks in the sequence to a sharing platform; and S2. evaluating resources that may be provided by a plurality of factories on the sharing platform, sequentially matching, according to an evaluation result, factory resources that allow completion of the plurality of tasks, and then completing a handshake and generating a data block of the blockchain.

Further, resources required for the industrial manufacturing order include raw materials, manpower, accessories, devices, and transportation.

Further, the step S2 further comprises the steps of: S21. evaluating resources that may be provided by a plurality of factories on the sharing platform, and sequentially matching, according to an evaluation result, factory resources that allow completion of the plurality of tasks to form a plurality of process routes for completing the industrial manufacturing order; and S22 . extracting a plurality of parameters of each process route, recommending, according to at least one preset parameter priority principle, a process route for completing the industrial manufacturing order, and then completing a handshake and generating a blockchain data block based on the process route.

Further, the parameters comprise cost and efficiency, the cost comprising raw material cost, machine depreciation cost, sales cost, labor cost, and product loss cost, wherein the efficiency is related to processing time, waiting time, and transportation time of a process step.

Further, the data block comprises header information and transaction information, wherein the transaction information comprises a serial number, entity information, and exchange value information.

Further, the header information comprises the encryption code, root node, and timestamp of the previous data block, as well as the verification code of the present data block, wherein the encryption code of the previous data block is a hash code, the verification code of the present data block is a nonce code, and the hash code is calculated on the basis of the nonce code, the entity information, and the exchange value information.

Further, the entity information comprises producer, manufacturer, material, and device.

Further, the data exchange information comprises ability, quantity, resource availability time, duration, transportation distance, and cost.

A second aspect of the present invention provides a blockchain-based industrial manufacturing resource sharing apparatus, comprising: a processor; and a memory coupled to the processor, the memory having an instruction stored therein, wherein the instruction, when executed by the processor, causes the electronic apparatus to perform actions comprising: S1. receiving an industrial manufacturing order, analyzing resources required to complete the industrial manufacturing order, splitting the process of completing the industrial manufacturing order into a plurality of tasks in a sequence, and then pushing the plurality of tasks in the sequence to a sharing platform; and S2. evaluating resources that may be provided by a plurality of factories on the sharing platform, sequentially matching, according to an evaluation result, factory resources that allow completion of the plurality of tasks, and then completing a handshake and generating a data block of the blockchain.

Further, resources required for the industrial manufacturing order include raw materials, manpower, accessories, devices, and transportation.

Further, the action S2 further comprises the steps of: S21. evaluating resources that may be provided by a plurality of factories on the sharing platform, and sequentially matching, according to an evaluation result, factory resources that allow completion of the plurality of tasks to form a plurality of process routes for completing the industrial manufacturing order; and S22 . extracting a plurality of parameters of each process route, recommending, according to at least one preset parameter priority principle, a process route for completing the industrial manufacturing order, and then completing a handshake and generating a blockchain data block based on the process route.

Further, the parameters comprise cost and efficiency, the cost comprising raw material cost, machine depreciation cost, sales cost, labor cost, and product loss cost, the efficiency being related to processing time, waiting time, and transportation time of a process step.

Further, the data block comprises header information and transaction information, wherein the transaction information comprises a serial number, entity information, and exchange value information.

Further, the header information comprises the encryption code, root node, and timestamp of the previous data block, as well as the verification code of the present data block, wherein the encryption code of the previous data block is a hash code, the verification code of the present data block is a nonce code, and the hash code is calculated on the basis of the nonce code, the entity information, and the exchange value information.

Further, the entity information comprises producer, manufacturer, material, and device.

Further, the data exchange information comprises ability, quantity, resource availability time, duration, transportation distance, and cost.

A third aspect of the present invention provides a blockchain-based industrial manufacturing resource sharing device, comprising: an analysis and splitting device for receiving an industrial manufacturing order, analyzing resources required to complete the industrial manufacturing order, splitting the process of completing the industrial manufacturing order into a plurality of tasks in a sequence, and then pushing the plurality of tasks in the sequence to a sharing platform; and an evaluation and matching device for evaluating resources that may be provided by a plurality of factories on the sharing platform, sequentially matching, according to an evaluation result, factory resources that allow completion of the plurality of tasks, and then completing a handshake and generating a data block of the blockchain.

Further, resources required for the industrial manufacturing order include raw materials, manpower, accessories, devices, and transportation.

Further, the evaluation matching device is configured to: evaluate resources that may be provided by a plurality of factories on the sharing platform, and sequentially match, according to an evaluation result, factory resources that allow completion of the plurality of tasks to form a plurality of process routes for completing the industrial manufacturing order; and extract a plurality of parameters of each process route, recommend, according to at least one preset parameter priority principle, a process route for completing the industrial manufacturing order, and then complete a handshake and generate a blockchain data block based on the process route.

Further, the parameters comprise cost and efficiency, the cost comprising raw material cost, machine depreciation cost, sales cost, labor cost, and product loss cost, the efficiency being related to processing time, waiting time, and transportation time of a process step.

Further, the data block comprises header information and transaction information, wherein the transaction information comprises a serial number, entity information, and exchange value information.

Further, the header information comprises the encryption code, root node, and timestamp of the previous data block, as well as the verification code of the present data block, wherein the encryption code of the previous data block is a hash code, the verification code of the present data block is a nonce code, and the hash code is calculated on the basis of the nonce code, the entity information, and the exchange value information.

Further, the entity information comprises producer, manufacturer, material, and device.

Further, the data exchange information comprises ability, quantity, resource availability time, duration, transportation distance, and cost.

A fourth aspect of the present invention further provides a computer program product that is tangibly stored on a computer-readable medium and comprises a computer-executable instruction, wherein the computer-executable instruction, when executed, causes at least one processor to execute the method according to the first aspect of the present invention.

A fifth aspect of the present invention further provides a computer-readable medium having a computer-executable instruction stored thereon, wherein the computer-executable instruction, when executed, causes at least one processor to perform the method according to the first aspect of the present invention.

A blockchain-based industrial manufacturing resource sharing mechanism provided by the present invention allows full utilization of factory resources on a sharing platform at a low cost and a high efficiency, and the present invention realizes resource sharing under different factors. For manufacturers, resource utilization and production efficiency have improved. For customers, costs are reduced.

### Brief Description of the Drawings

Fig. 1 is a schematic structural diagram of a blockchain-based industrial manufacturing resource sharing mechanism according to a specific embodiment of the present invention;
Fig. 2 is a schematic diagram of resource sharing of a blockchain-based industrial manufacturing resource sharing mechanism according to a specific embodiment of the present invention;
Fig. 3 is a schematic diagram of the content structure of a blockchain-based industrial manufacturing resource sharing mechanism according to a specific embodiment of the present invention.

### Specific Embodiments

Specific embodiments of the present invention will be described below with reference to the drawings.

A blockchain-based industrial manufacturing resource sharing mechanism provided by the present invention addresses the shortcoming of ignoring individual differences in the entire industrial manufacturing process in the prior art, and, on the basis of relatively effective group behaviors in the industrial manufacturing process, allows utilization of individual differences therein. In the present invention, authority is given to each production unit in the industrial manufacturing process, and free data circulation is realized between production units, thereby achieving decentralization.

The present invention utilizes the concept of blockchain, which is a network digital shared transaction platform based on distributed data storage, point-to-point transmission, and encryption verification algorithms. At the core of a blockchain are decentralization and how to reach a consensus in an insecure environment, and mathematical algorithms are used at different nodes to establish trust between them and obtain rights and interests. In order to allow orderly data transmission and transactions in the blockchain, a series of mathematical algorithms are used to generate data blocks following a specific sequence. The core concepts of a blockchain are decentralization, openness, and trustworthiness, and blockchains are widely used in fields including supply chain management, automation, 3D printing, and industrial Internet of Things.

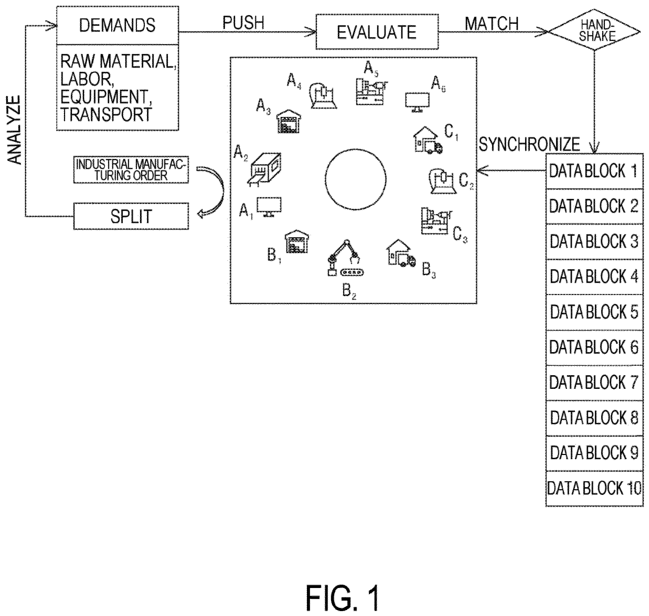

Fig. 1 shows a schematic structural diagram of a blockchain-based industrial manufacturing resource sharing mechanism according to a specific embodiment of the present invention. As shown in Fig. 1, on the sharing platform, all factories and their resources are shared, and may be called as needed. Exemplarily, it comprises three factories, among which factory A has software tool A₁, device A₂, raw materials A₃, device A₄, device A₅, and device A₆, factory B has raw material B₁, robot B₂, and transportation device B₃, and factory C has transportation device C₁, device C₂, and third device C₃.

First, step S1 is performed to receive an industrial manufacturing order, analyze resources required to complete the industrial manufacturing order, split the process of completing the industrial manufacturing order into a plurality of tasks in a sequence, and then push the plurality of tasks in the sequence to a sharing platform;
the sequence of a typical closed production cycle is : sale order; purchase of raw materials (purchase material); storage of raw materials in a warehouse (material in warehouse); transportation of raw materials to a production line (transportation to production shop/line); production of products along a plurality of machines based on process routes (follow routing from machine A to Z); transportation of finished products to a warehouse (transportation to warehouse); and delivery of a product to the end customer (delivery to customer).

In most blockchain-based industrial supply chain applications, the above-described sub-steps "transportation to production shop/line", "follow routing from machine A to Z", and "transportation to warehouse" are simplified into a production process or even directly ignored. The reason is that customer tracking of products does not necessarily require capturing many details like tracking with a machine or artificially. However, for industrial manufacturing, such information is critical and managed by specialized industrial software. A production process usually consists of several typical entities: customer, supplier, warehouse, machine, transportation tool, raw material, and product. Therefore, each step in the above-described process may be regarded as the cooperation of value exchange between two or more entities.

Specifically, as shown in Fig. 1, in this embodiment, an industrial manufacturing order is received by the software tool A₁ of factory A, and the content of the industrial manufacturing order is "manufacturing 100 tables". Specifically, resources and process steps required to complete the industrial manufacturing order are analyzed. Among them, the resources required for "manufacturing 100 tables" include raw material, accessories, and manpower, the required raw material being x tons of timber, the required accessories being y sets of bolts and nuts, the required manpower being z persons. Among them, the process steps of "manufacturing 100 tables" include manufacturing tabletops and table legs, wherein 100 tabletops are manufactured and then 400 table legs are manufactured. Specifically, for the manufacture of tabletops and table legs, a cutting machine and a polishing machine are required, then bolts and nuts are screwed using a robot between tabletops and table legs, 1 tabletop is assembled together with 4 matching table legs, the raw materials and various intermediate process materials are transported, and the tables are finally transported to the customer to complete the delivery.

Then, according to the preceding analysis, the process of completing the industrial manufacturing order "manufacturing 100 tables" is divided into a plurality of tasks in a sequence: task 1: retrieving x tons of timber; task 2: retrieving y sets of bolts and nuts; task 3: cutting the timber into 100 tabletop billets by using the cutting machine; task 4: cutting the timber into 400 table leg billets by using the cutting machine; task 5: polishing the 100 tabletop billets into tabletops by using the polishing machine; task 6: polishing the 400 table leg billets into table legs by using the polishing machine; task 7: drilling holes in the 100 tabletops by using a drilling machine; task 8: drilling holes in the 400 table legs by using the drilling machine; task 9: screwing bolts and nuts between the tabletops and the table legs by using a fastening device, wherein 1 tabletop is assembled together with 4 matching table legs until all the 400 tables are assembled; and task 10: delivering the 400 tables to the customer. Then, the plurality of split tasks are pushed to a sharing platform.

Then, S2 is performed to evaluate resources that may be provided by a plurality of factories on the sharing platform, sequentially match, according to an evaluation result, factory resources that allow completion of the plurality of tasks, and then complete a handshake and generate a data block of the blockchain.

Usually, in a technical manufacturing process, since more than one production line optional resource is available for execution in each manufacturing step, when a customer places an industrial manufacturing order, the present invention allows evaluation of the efficiency and cost of all resources of all factories on the sharing platform, and then matching of the optimal process route. Then, on the basis of the priority requirements of the parameters required by the industrial manufacturing order, the optimal process route is matched and a data block is generated.

Assuming that an industrial manufacturing order in this embodiment is matched to the optimal process route according to cost factors, then, on the basis of a cost priority plan of this embodiment, the present invention allows execution of resource sharing on the sharing platform, and the premises of resource sharing are: transparent information; resource availability; fair competence; and maximum benefit. The present invention uses a blockchain to meet the above-mentioned premises for resource sharing. On the basis of resource sharing, due to a specific business and production model, the present invention can overcome the limitations of a single factory or limited resources, and finally realize an industry and market without boundaries.

For example, for two identical production lines located in different factories, it is assumed that the cost to the end customer in this case is only related to location and waiting time due to the manufacturing plan. Therefore, all the resources on the sharing platform can compete for the industrial manufacturing order. The present invention can make each industrial manufacturing step optimal at the moment. Likewise, due to changes in the market and product life cycle, the availability of machinery or equipment resources in a factory is not as expected.

Specifically, as shown in Fig. 1, factory A has a raw material A₃, the raw material A₃ is timber, and the amount of timber is greater than x tons, which therefore may be used to complete task 1 "retrieving x tons of timber". Factory A also has a device A₅, particularly a cutting machine, which may be used to complete task 3 "cutting the timber into 100 tabletop billets by using the cutting machine" and task 4 "cutting the timber into 400 table leg billets by using the cutting machine". Factory C also has a device C₃, which is also particularly a cutting machine and may also be used to complete task 3 "cutting the timber into 100 tabletop billets by using the cutting machine" and task 4 "cutting the timber into 400 table leg billets by using the cutting machine". In addition, factory B has raw materials B₁, the raw materials B₁ are bolts and nuts, and the number of the bolts and nuts is larger than y sets, which therefore may be used to complete task 2 "retrieving y sets of bolts and nuts". In addition, factory A also has a device A₆, which is a polishing machine, and therefore it may be used to complete task 5 "polishing the 100 tabletop billets into tabletops by using the polishing machine" and task 6 "polishing the 400 table leg billets into table legs by using the polishing machine". In addition, the A factory has a device A₄, which is particularly a drilling machine and is used to complete task 7 "drilling holes in the 100 tabletops by using a drilling machine" and task 8 "drilling holes in the 400 table legs by using the drilling machine" . Factory C has a device C₂, which is particularly a drilling machine and may also be used to complete task 7 "drilling holes in the 100 tabletops by using a drilling machine" and task 8 "drilling holes in the 400 table legs by using the drilling machine". In addition, factory A has a device A₅, which is particularly a fastening device and may be used to complete task 9 "screwing bolts and nuts between the tabletops and the table legs by using a fastening device". Factory C also has a device C₃, which is particularly a fastening device and may also be used to complete task 9 "screwing bolts and nuts between the tabletops and the table legs by using a fastening device". Factory B has a robot B₂, and the robot B₂ is a fastening robot that may also be used to complete task 9 "screwing bolts and nuts between the tabletops and the table legs by using a fastening device". Finally, factory B has a transportation device B₃, and factory C has a transportation device C₁, both of which may be used to complete task 10 "delivering the 400 tables to the customer". Therefore, the process of an industrial manufacturing order described in step S1 may be divided into a plurality of tasks in sequence, and each task corresponds to one or more resources or apparatuses on the sharing platform, as shown in the following table:

**Table 1: Correspondence of industrial manufacturing order tasks and factory resources on the sharing platform**

| Task | Factory resource |
|---|---|
| Task 1 | A₃ |
| Task 2 | B₁ |
| Task 3 | A₅, C₃ |
| Task 4 | A₅, C₃ |
| Task 5 | A₆ |
| Task 6 | A₆ |
| Task 7 | A₄, C₂ |
| Task 8 | A₄, C₂ |
| Task 9 | A₅, C₃, B₂ |
| Task 10 | C₁ |

The factory resources that have completed the above-mentioned tasks may be permuted and combined to obtain a plurality of different process routes.

Specifically, the step S2 further comprises a sub-step S21 and a sub-step S22.

First, the sub-step S21 is performed to evaluate resources that may be provided by a plurality of factories on the sharing platform, and sequentially match, according to an evaluation result, factory resources that allow completion of the plurality of tasks to form a plurality of process routes for completing the industrial manufacturing order.

In this embodiment, all factory resources that can complete tasks 1 to 10 shown in Table 1 may be permuted and combined to obtain a plurality of different process routes.

Exemplarily, the first process route comprises: completing task 1 by A₃; completing task 2 by B₁; completing task 3 by A₅; completing task 4 by A₅; completing task 5 by A₆; completing task 6 by A₆; completing task 7 by A₄; completing task 8 by A₄; completing task 9 by A₅; and completing task 10 by C₁.

Exemplarily, the second process route comprises: completing task 1 by A₃; completing task 2 by B₁; completing task 3 by C₃; completing task 4 by C₃; completing task 5 by A₆; completing task 6 by A₆; completing task 7 by C₂; completing task 8 by C₂; completing task 9 by C₃; and completing task 10 by C₁.

Exemplarily, the third process route comprises: completing task 1 by A₃; completing task 2 by B₁; completing task 3 by A₅; completing task 4 by A₅; completing task 5 by A₆; completing task 6 by A₆; completing task 7 by A₄; completing task 8 by A₄; completing task 9 by B₂; and completing task 10 by C₁.

Then, the sub-step S22 is performed to extract a plurality of parameters of each process route, recommend, according to at least one preset parameter priority principle, a process route for completing the industrial manufacturing order, and then complete a handshake and generate a blockchain data block based on the process route.

Among them, the parameters of a process route comprise cost and efficiency, the cost comprising material cost, machine depreciation, distribution cost, labor cost, and product loss cost, the efficiency being related to process time, waiting time, and transportation time. As shown in Table 1, factory A, factory B, and factory C on the entire sharing platform have a plurality of resources, the tasks into which an industrial manufacturing order is split in this embodiment correspond to one or more factory resources, and the types of resource of each factory may be different. Therefore, the resources of each factory have different resource availability time, energy consumption, etc. even when the same task is to be completed. Therefore, with the present invention, an industrial manufacturing order needs to be split into a plurality of tasks, which are then permuted and combined according to different factory resources to obtain, by statistical calculation, a plurality of process routes for completing the industrial manufacturing order, and then the resource available time, energy consumption, and other factors for each process route are summarized. In the present invention, process routes are matched according to cost and efficiency. Therefore, a specific process route is a collection of the above-mentioned factors.

In this embodiment, the first process route is characterized in that most of the tasks are completed in factory A, which saves a lot of time and cost of transportation between different factories and possible losses during transportation, and therefore, if it is preset that the transportation time and the cost of product loss during transportation are optimal, then the present invention will automatically recommend the first process route.

Task 9 of the third process route is completed by the robot B₂ in factory B, and therefore, the robot B₂ is a fastening robot that can efficiently complete task 9 "screwing bolts and nuts between the tabletops and the table legs by using a fastening device" . Therefore, if it is preset that the efficiency is optimal, then the present invention will automatically recommend the first process route.

In the present invention, the processes involved in the entire handshake process are classified, comprising requirement, supply, manufacturing, and distribution. First, after a customer places an order, a requirement for product manufacturing is generated, and, in this embodiment, the products to be manufactured are tables . Then, a contract for the supply of raw materials needs to be signed, in which the raw material is timber. Then, according to the matched process route, the first machine or device that will execute the process route is selected and booked in accordance with the contract signed in the previous step. Similarly, all the machines or devices are selected and booked according to the process route. Finally, a distribution contract for the entire factory or production line of the machines or devices of the entire process route is signed.

After a handshake operation is completed, a plurality of data blocks are generated, and as shown in Fig. 1, a plurality of data blocks are in a data block queue according to data block 1, data block 2, data block 3, data block 4, data block 5, data block 6, data block 7, data block 8, data block 9, and data block 10. Among them, data block 1 corresponds to task 1, data block 2 corresponds to task 2, data block 3 corresponds to task 3, data block 4 corresponds to task 4, data block 5 corresponds to task 5, data block 6 corresponds to task 6, data block 7 corresponds to task 7, data block 8 corresponds to task 8, data block 9 corresponds to task 9, and data block 10 corresponds to task 10. The structures of the above-mentioned data blocks are consistent and have a complete sequence, and the next data block may not be executed before the content involved in one data block is completed.

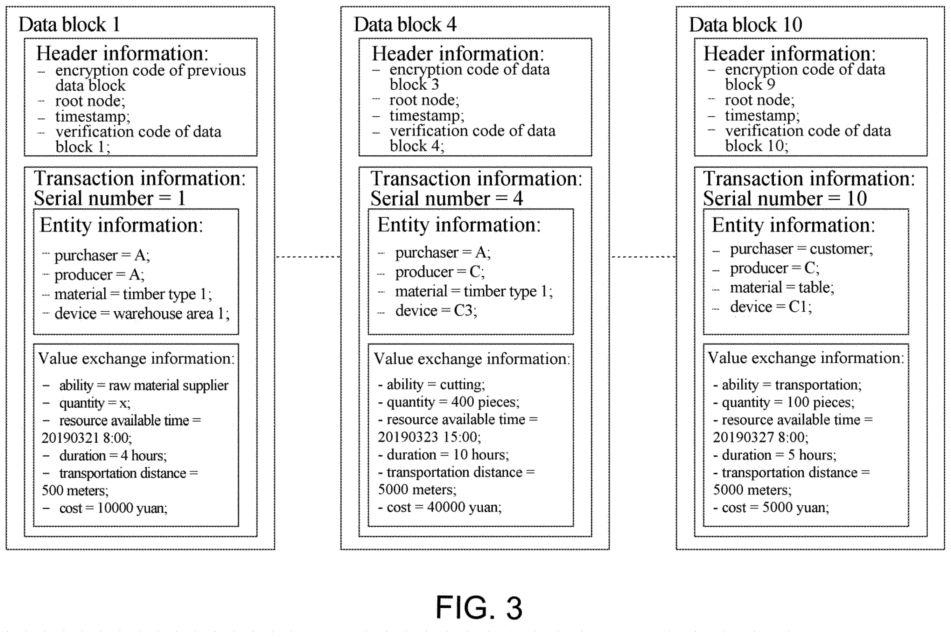

Fig. 3 is a schematic diagram of the content structure of a blockchain-based industrial manufacturing resource sharing mechanism according to a specific embodiment of the present invention. As shown in Fig. 3, the data block comprises header information and transaction information, wherein the transaction information comprises a serial number, entity information, and exchange value information. The header information comprises the encryption code, root node, and timestamp of the previous data block, as well as the verification code of the present data block, wherein the encryption code of the previous data block is a hash code, the verification code of the present data block is a nonce code, and the hash code is calculated on the basis of the nonce code, the entity information, and the exchange value information. Specifically, the entity information comprises producer, manufacturer, material, and device. The data exchange information comprises ability, quantity, resource availability time, duration, transportation distance, and cost.

It should be noted that the above-mentioned purchaser is not necessarily a customer, but may be a party that purchases a service or resource from a factory device functioning as a producer. For example, factory A can function as a purchaser to trade a specific process step from factory B or factory C and pay for it.

Fig. 3 shows the specific structures and contents of data block 1, data block 4, and data block 10. Specifically, data block 1 corresponds to task 1, that is, "retrieving x tons of timber". If data block 1 is the first data block, then the header information of data block 1 does not contain the encryption code of the previous data block. The transaction information comprises "sequence=1", indicating that the sequence of data block 1 in the queue is 1. The entity information comprises "purchaser=A", "producer=A", "material=timber type 1" and "device=warehouse area 1". The content of the entity information indicates that factory A retrieves the material whose raw material is "timber type 1" from warehouse area 1 of factory A. Among them, "timber type 1" is particularly one type of the raw material timber. "Warehouse area 1" is not a real device, but indicates that timber is stored in warehouse area 1 of factory A. "Device = warehouse area 1" indicates all the resources in the sharing platform, including devices, machines, and warehouse areas. Specifically, both the purchaser and the producer are in factory A, indicating that task 2 is also executed in factory A. The value exchange information of data block 1 comprises "ability=raw material supplier", "quantity=x tons", "resource available time=20190321 8:00", "duration=4 hours", "transportation distance=500 meters", and "cost=10000 yuan". Among them, ability refers to the ability of the factory to provide resources, wherein the ability of factory A is functioning as a material supplier, and it can complete the retrieval of x tons of timber at 8 a.m. on March 21, 2019. Since both task 1 and task 2 are performed in factory A, the transportation distance is only 500 meters, the entire cost of timber and transportation thereof is 10000 yuan, and the retrieval of x tons of timber from warehouse area 1 of factory A and transportation thereof to the execution device of the second task takes 4 hours.

Specifically, data block 4 corresponds to task 4, that is, "cutting the timber into 400 table leg billets by using the cutting machine". Since the encryption code of the data block preceding data block 4 is the hash code of data block 3, its verification code is the nonce code of data block 4. The transaction information comprises " sequence=4 ", indicating that the sequence of data block 4 in the queue is 4. The entity information comprises "purchaser=A", "producer=C", "material=timber type 1" and "device=C₃". The cutting device C₃ of factory C cuts the material of "timber type 1" into 400 table leg billets, and supplies them to factory A. Among them, "timber type 1" is particularly one type of timber. Specifically, the producer is factory C and the purchaser is factory A, indicating that task 5 is executed in factory A and task 4 is executed in factory C. The value exchange information of data block 1 comprises "ability=cutting", "quantity=400 pieces", "resource available time=20190323 15:00", "duration=10 hours", "transportation distance=5000 meters", and "cost=40000 yuan". Among them, ability refers to the ability of the factory to provide resources, wherein the ability of factory A is that it has a device capable of cutting, and that its cutting device may be used to cut timber into 400 table leg billets at 3 p.m. on March 23, 2019. Since task 4 is executed in factory C and the next task 5 is executed in factory A, the transportation of 400 table leg billets from factory A to factory C covers a distance of 5000 meters, the entire cutting and transportation cost is 40000 yuan, and it takes 10 hours to cut the timber into 400 table leg billets in factory C and transport them to device A₆ of factory A where task 5 is executed.

Specifically, data block 10 corresponds to task 10, that is, "delivering the 400 tables to the customer". Since the encryption code of the data block preceding data block 10 is the hash code of data block 9, its verification code is the nonce code of data block 10. The transaction information comprises "sequence=10", indicating that the sequence of data block 10 in the queue is 10. The entity information comprises "purchaser=customer", "producer=C", "material=table" and "device=C1". The transport device C1 of factory C transports 100 tables to the end customer. The value exchange information of data block 10 comprises "ability=transportation", "quantity=100 pieces", "resource available time=20190327 8:00", "duration=5 hours", "transportation distance=5000 meters", and "cost=5000 yuan". Among them, ability refers to the ability of the factory to provide resources, and herein the ability of factory A is that it has a transportation device that may be used to execute the task of transporting 100 tables to the customer at 8 a.m. on March 27, 2019. Since task 10 is performed in factory C, the transportation of 100 tables from factory A to the end customer covers a distance of 5000 meters, the cost of packaging, loading, and transportation of all the tables is 5000 yuan, and it takes 5 hours to package the tables and then transport them from factory A to the end customer.

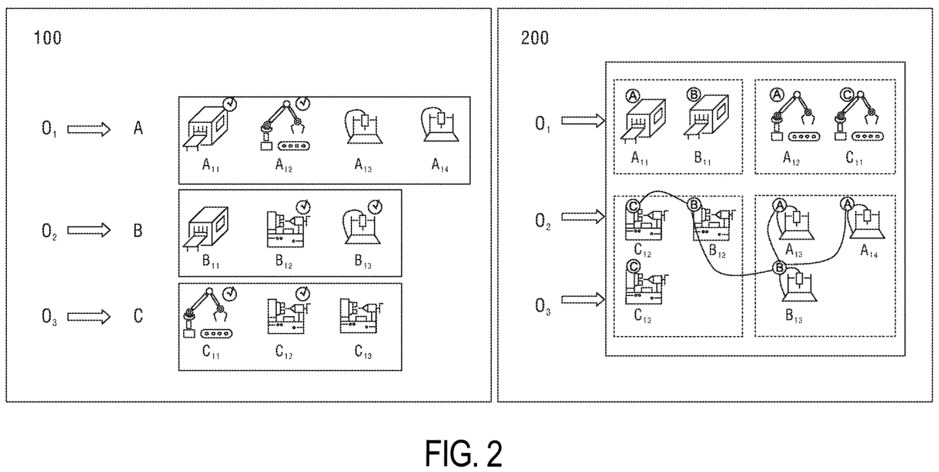

Usually, the machine device resources of a factory cannot be set as expected due to changes in the market and product life cycle. Fig. 2 is a schematic diagram of resource sharing of a blockchain-based industrial manufacturing resource sharing mechanism according to a specific embodiment of the present invention, and, as shown in Fig. 2, there is an almost one-to-one correspondence of industrial manufacturing orders and factories in the industrial manufacturing solution 100 provided by the prior art. Among them, factory A has a first device A₁₁, a second device A₁₂, a third device A₁₃, and a fourth device A₁₄; factory B has a first device B₁₁, a second device B₁₂, and a third device B₁₃; and factory C has a first device C₁₁, a second device C₁₂, and a third device C₁₃. As shown in Fig. 2, the first industrial manufacturing order O₁ in the industrial manufacturing solution 100 provided by the prior art corresponds to the factory A, which is specifically completed by the first device A₁₁ and the second device A₁₂ in sequence. Similarly, the second industrial manufacturing order O₂ corresponds to factory B, which is specifically completed by the second device B₁₂ and the third device B₁₃ in sequence. The third industrial manufacturing order O₃ corresponds to factory C, which is specifically completed by the first device C₁₁ and the second device C₁₂ in sequence. Therefore, every time an industrial manufacturing order is received in the prior art, it is necessary to manually evaluate the factories that have all the resources for completing the order, and select a currently available factory to execute the order, wherein principally the order may only be executed in the selected factory. Assuming that factory B is overloaded due to a booming market, if each factory still only executes its own industrial manufacturing orders, all the factories will become very inefficient.

Correspondingly, with the blockchain-based industrial manufacturing resource sharing mechanism 200 provided by the present invention, all the resources of all the factories on the sharing platform are treated as shared resources. As shown in Fig. 2, in the present invention, all the factory devices are classified, and, for example, if classified according to functions, the first device A₁₁ of factory A and the first device B₁₁ of factory B are the same class of devices. Similarly, the second device A₁₂ of factory A and the first device of factory C, the second device C₁₂ of factory C, the second device B₁₂ of factory B and the third device C₁₃ of factory C, the third device A₁₃ of factory A, the fourth device A₁₄ of factory A and the third device B₁₃ of factory B are also the same class of devices. With the present invention, when the first industrial manufacturing order O₁, the second industrial manufacturing order O₂, and the third industrial manufacturing order are received, all the devices on the platform that can execute each industrial manufacturing order, not just one factory, are first evaluated. For example, a part of the first industrial manufacturing order O₁ may first be executed by selecting one of the first device A₁₁ of factory A and the first device B₁₁ of factory B, and then the remaining part may be executed by selecting one of the second device A₁₂ of factory A and the first device of factory C. For example, a part of the second industrial manufacturing order O₂ may first be executed by selecting the second device C₁₂ of factory C or the second device B₁₂ of factory B, and then the remaining part is executed by selecting one of the second device A₁₂ of factory A and the first device of factory C. In the present invention, all the resources on the sharing platform are classified by ability and not by physical location. Therefore, in the present invention, a process route for executing an industrial manufacturing order is judged on the basis of efficiency, power consumption, resource occupancy rate, etc., and the present invention allows improvement of the utilization rate of all the factory resources on the sharing platform to fully utilize all the resource occupancy rates on the sharing platform, thereby improving the performance of factory resources on the entire sharing platform.

A blockchain-based industrial manufacturing resource sharing mechanism provided by the present invention allows full utilization of factory resources on a sharing platform at a low cost and a high efficiency, and the present invention realizes resource sharing under different factors. For manufacturers, resource utilization and production efficiency have improved. For customers, costs are reduced.

In the present invention, the concept of blockchain is utilized, and especially automatic matching of process routes is performed in industrial manufacturing to find the optimal industrial manufacturing process route. A blockchain represents a decentralized management area, which is the opposite of centralized management.
A second aspect of the present invention provides a blockchain-based industrial manufacturing resource sharing apparatus, comprising: a processor; and a memory coupled to the processor, the memory having an instruction stored therein, wherein the instruction, when executed by the processor, causes the electronic apparatus to perform actions comprising: S1. receiving an industrial manufacturing order, analyzing resources required to complete the industrial manufacturing order, splitting the process of completing the industrial manufacturing order into a plurality of tasks in a sequence, and then pushing the plurality of tasks in the sequence to a sharing platform; and S2. evaluating resources that may be provided by a plurality of factories on the sharing platform, sequentially matching, according to an evaluation result, factory resources that allow completion of the plurality of tasks, and then completing a handshake and generating a data block of the blockchain.

Further, resources required for the industrial manufacturing order include raw materials, manpower, accessories, devices, and transportation.

Further, the action S2 further comprises the steps of: S21. evaluating resources that may be provided by a plurality of factories on the sharing platform, and sequentially matching, according to an evaluation result, factory resources that allow completion of the plurality of tasks to form a plurality of process routes for completing the industrial manufacturing order; and S22. extracting a plurality of parameters of each process route, recommending, according to at least one preset parameter priority principle, a process route for completing the industrial manufacturing order, and then completing a handshake and generating a blockchain data block based on the process route.

Further, the parameters comprise cost and efficiency, the cost comprising raw material cost, machine depreciation cost, sales cost, labor cost, and product loss cost, the efficiency being related to processing time, waiting time, and transportation time of a process step.

Further, the data block comprises header information and transaction information, wherein the transaction information comprises a serial number, entity information, and exchange value information.

Further, the header information comprises the encryption code, root node, and timestamp of the previous data block, as well as the verification code of the present data block, wherein the encryption code of the previous data block is a hash code, the verification code of the present data block is a nonce code, and the hash code is calculated on the basis of the nonce code, the entity information, and the exchange value information.

Further, the entity information comprises producer, manufacturer, material, and device.

Further, the data exchange information comprises ability, quantity, resource availability time, duration, transportation distance, and cost.

A third aspect of the present invention provides a blockchain-based industrial manufacturing resource sharing device, comprising: an analysis and splitting device for receiving an industrial manufacturing order, analyzing resources required to complete the industrial manufacturing order, splitting the process of completing the industrial manufacturing order into a plurality of tasks in a sequence, and then pushing the plurality of tasks in the sequence to a sharing platform; and an evaluation and matching device for evaluating resources that may be provided by a plurality of factories on the sharing platform, sequentially matching, according to an evaluation result, factory resources that allow completion of the plurality of tasks, and then completing a handshake and generating a data block of the blockchain.

Further, resources required for the industrial manufacturing order include raw materials, manpower, accessories, devices, and transportation.

Further, the evaluation and matching device is further configured to evaluate resources that may be provided by a plurality of factories on the sharing platform, and sequentially match, according to an evaluation result, factory resources that allow completion of the plurality of tasks to form a plurality of process routes for completing the industrial manufacturing order; and extract a plurality of parameters of each process route, recommend, according to at least one preset parameter priority principle, a process route for completing the industrial manufacturing order, and then complete a handshake and generate a blockchain data block based on the process route.

Further, the parameters comprise cost and efficiency, the cost comprising raw material cost, machine depreciation cost, sales cost, labor cost, and product loss cost, the efficiency being related to processing time, waiting time, and transportation time of a process step.

Further, the data block comprises header information and transaction information, wherein the transaction information comprises a serial number, entity information, and exchange value information.

Further, the header information comprises the encryption code, root node, and timestamp of the previous data block, as well as the verification code of the present data block, wherein the encryption code of the previous data block is a hash code, the verification code of the present data block is a nonce code, and the hash code is calculated on the basis of the nonce code, the entity information, and the exchange value information.

Further, the entity information comprises producer, manufacturer, material, and device.

Further, the data exchange information comprises ability, quantity, resource availability time, duration, transportation distance, and cost.

A fourth aspect of the present invention further provides a computer program product that is tangibly stored on a computer-readable medium and comprises a computer-executable instruction, wherein the computer-executable instruction, when executed, causes at least one processor to execute the method according to the first aspect of the present invention.

A fifth aspect of the present invention further provides a computer-readable medium having a computer-executable instruction stored thereon, wherein the computer-executable instruction, when executed, causes at least one processor to perform the method according to the first aspect of the present invention.

While the present invention has been described in detail with the above-mentioned preferred embodiments, it should be understood that the above description should not be construed as limiting the present invention. Various amendments and substitutions to the present invention will be apparent after perusal of the above content by those skilled in the art. Thus, the scope of protection of the present invention should be defined by the attached claims. In addition, no reference numerals specified in a claim should be construed as limiting an involved claim; the term "comprising" does not exclude any devices or steps that are not listed in another claim or the description; and terms such as "first" and "second" are used to indicate designations, and do not indicate any specific order.

## Claims

1. A blockchain-based industrial manufacturing resource sharing method, wherein it comprises the steps of:
S1. receiving an industrial manufacturing order, analyzing resources required to complete the industrial manufacturing order, splitting the process of completing the industrial manufacturing order into a plurality of tasks in a sequence, and then pushing the plurality of tasks in the sequence to a sharing platform; and
S2. evaluating resources that may be provided by a plurality of factories on the sharing platform, sequentially matching, according to an evaluation result, factory resources that allow completion of the plurality of tasks, and then completing a handshake and generating a data block of a blockchain.

2. The blockchain-based industrial manufacturing resource sharing method as claimed in claim 1, **characterized in that** resources required for the industrial manufacturing order include raw materials, manpower, accessories, devices, and transportation.

3. The blockchain-based industrial manufacturing resource sharing method as claimed in claim 2, **characterized in that** the step S2 further comprises the steps of:
S21. evaluating resources that may be provided by a plurality of factories on the sharing platform, and sequentially matching, according to an evaluation result, factory resources that allow completion of the plurality of tasks to form a plurality of process routes for completing the industrial manufacturing order; and
S22. extracting a plurality of parameters of each process route, recommending, according to at least one preset parameter priority principle, a process route for completing the industrial manufacturing order, and then completing a handshake and generating a blockchain data block based on the process route.

4. The blockchain-based industrial manufacturing resource sharing method as claimed in claim 3, **characterized in that** the parameters comprise cost and efficiency, the cost comprising raw material cost, machine depreciation cost, sales cost, labor cost, and product loss cost, the efficiency being related to processing time, waiting time, and transportation time of a process step.

5. The blockchain-based industrial manufacturing resource sharing method as claimed in claim 1, **characterized in that** the data block comprises header information and transaction information, wherein the transaction information comprises a serial number, entity information, and exchange value information.

6. The blockchain-based industrial manufacturing resource sharing method as claimed in claim 5, **characterized in that** the header information comprises the encryption code, root node, and timestamp of the previous data block, as well as the verification code of the present data block, wherein the encryption code of the previous data block is a hash code, the verification code of the present data block is a nonce code, and the hash code is calculated on the basis of the nonce code, the entity information, and the exchange value information.

7. The blockchain-based industrial manufacturing resource sharing method as claimed in claim 5, **characterized in that** the entity information comprises producer, manufacturer, material, and device.

8. The blockchain-based industrial manufacturing resource sharing method as claimed in claim 5, **characterized in that** the data exchange information comprises ability, quantity, resource availability time, duration, transportation distance, and cost.

9. A blockchain-based industrial manufacturing resource sharing apparatus, comprising:
a processor; and
a memory coupled to the processor, the memory having an instruction stored therein, wherein the instruction, when executed by the processor, causes the electronic apparatus to perform actions comprising:
S1. receiving an industrial manufacturing order, analyzing resources required to complete the industrial manufacturing order, splitting the process of completing the industrial manufacturing order into a plurality of tasks in a sequence, and then pushing the plurality of tasks in the sequence to a sharing platform; and
S2. evaluating resources that may be provided by a plurality of factories on the sharing platform, sequentially matching, according to an evaluation result, factory resources that allow completion of the plurality of tasks, and then completing a handshake and generating a data block of the blockchain.

10. The blockchain-based industrial manufacturing resource sharing apparatus as claimed in claim 9, **characterized in that** resources required for the industrial manufacturing order include raw materials, manpower, accessories, devices, and transportation.

11. The blockchain-based industrial manufacturing resource sharing apparatus as claimed in claim 10, **characterized in that** the action S2 further comprises the steps of:
S21. evaluating resources that may be provided by a plurality of factories on the sharing platform, and sequentially matching, according to an evaluation result, factory resources that allow completion of the plurality of tasks to form a plurality of process routes for completing the industrial manufacturing order; and
S22. extracting a plurality of parameters of each process route, recommending, according to at least one preset parameter priority principle, a process route for completing the industrial manufacturing order, and then completing a handshake and generating a blockchain data block based on the process route.

12. The blockchain-based industrial manufacturing resource sharing apparatus as claimed in claim 11, **characterized in that** the parameters comprise cost and efficiency, the cost comprising raw material cost, machine depreciation cost, sales cost, labor cost, and product loss cost, the efficiency being related to processing time, waiting time, and transportation time of a process step.

13. The blockchain-based industrial manufacturing resource sharing apparatus as claimed in claim 9, **characterized in that** the data block comprises header information and transaction information, wherein the transaction information comprises a serial number, entity information, and exchange value information.

14. The blockchain-based industrial manufacturing resource sharing apparatus as claimed in claim 13, **characterized in that** the header information comprises the encryption code, root node, and timestamp of the previous data block, as well as the verification code of the present data block, wherein the encryption code of the previous data block is a hash code, the verification code of the present data block is a nonce code, and the hash code is calculated on the basis of the nonce code, the entity information, and the exchange value information.

15. The blockchain-based industrial manufacturing resource sharing apparatus as claimed in claim 13, **characterized in that** the entity information comprises producer, manufacturer, material, and device.

16. The blockchain-based industrial manufacturing resource sharing apparatus as claimed in claim 13, **characterized in that** the data exchange information comprises ability, quantity, resource availability time, duration, transportation distance, and cost.

17. A blockchain-based industrial manufacturing resource sharing device, comprising:
an analysis and splitting device for receiving an industrial manufacturing order, analyzing resources required to complete the industrial manufacturing order, splitting the process of completing the industrial manufacturing order into a plurality of tasks in a sequence, and then pushing the plurality of tasks in the sequence to a sharing platform; and
an evaluation and matching device for evaluating resources that may be provided by a plurality of factories on the sharing platform, sequentially matching, according to an evaluation result, factory resources that allow completion of the plurality of tasks, and then completing a handshake and generating a data block of the blockchain.

18. A computer program product, tangibly stored on a computer-readable medium and comprising a computer-executable instruction that, when executed, causes at least one processor to execute the method as claimed in any of claims 1 to 8.

19. A computer-readable medium, having a computer-executable instruction stored thereon, wherein the computer-executable instruction, when executed, causes at least one processor to execute the method as claimed in any of claims 1 to 8.
